# EUROPEAN PATENT APPLICATION

(11) **EP 2 523 292 A1**
(43) Date of publication of application: **14.11.2012**
(21) Application number: 11460025.7
(22) Date of filing: 09.05.2011
(51) Int. Cl.: H02H 7/04, H02H 9/00

(54) **A method and a system for protecting a power transformer against voltage surges while the circuit breaker is opening**

(71) Applicant: ABB Technology AG, 8050 Zürich (CH)
(72) Inventor: Piasecki, Wojciech, 30-611 Krakow (PL)
(74) Representative: Chochorowska-Winiarska, Krystyna

(57) **Abstract**

This invention relates to a method for protecting a power transformer against overvoltages while the circuit breaker is opening, in particular a vacuum circuit breaker, applicable in electric power systems, comprising an electrically interconnected transformer (3) and a circuit breaker (2). The system according to the invention includes the transformer-circuit breaker connection and applies both to a transformer without load and a transformer under load, especially inductive load. The system protecting a power transformer against overvoltages when the circuit breaker is closing is characterized by a protective element (5) which is connected to at least one of the phase terminals of the low voltage winding of the transformer (3).

## Description

This invention relates to a method for protecting a power transformer against voltage surges during opening of a circuit breaker, and in particular a vacuum circuit breaker, applicable in electric power systems comprising an electrically interconnected transformer and circuit breaker. The system according to the invention includes a transformer-circuit breaker connection and applies both to an unloaded transformer without load and a transformer under load, especially inductive load.

Switching processes in electric power systems often result in the occurrence of switching surges characterized by high rates of voltage rise dU/dt which pose a threat to equipment such as transformers or motors connected to such systems. In particular, vacuum circuit breakers characterized by current chopping before a natural zero crossing and characterized by their ability to interrupt high frequency currents can be a source of overvoltages of high rate of rise dU/dt occurring repeatedly during a single on or off switching. There is a well known problem of generating overvoltages of an oscillating character and repeated reignitions in the breaking chamber while interrupting inductive currents, which often takes place when switching off an unloaded transformer, and also in the case of a transformer under inductive load.

When inductive currents are interrupted, the chopping of inductive current before its natural zero causes that energy of a value of ½ l² L remains in the inductance of the transformer, where l is the value of the current for which the chopping took place, and L is the equivalent inductance of the transformer. After current has been chopped by the circuit breaker, this energy begins to oscillate in the resonant circuit formed by the equivalent inductance of the transformer and its capacitance. If the resonant frequency is large, a high-frequency recovery voltage appears on the terminals of the circuit breaker connected with the transformer, which causes a reignition in the breaking chamber.

Special conditions for generating overvoltages of a high rate of rise develop if the distance between the transformer and the circuit breaker is small, since in this case the impedance of the system-transformer connection is insignificant and in such case the small self-capacitance of the transformer can be re-charged in a very short time.

Overvoltages of a high rate of rise dU/dt can damage the insulation of the transformer or of its winding. An overvoltage of high rate of rise of a few dozen/hundred kV/µs and frequency oscillations in the order of a few dozen or a few hundred kHz, accumulating on the transformer insulation lead to degradation of the insulation and consequently to its breakdown, causing short circuits between the windings. Therefore, there is a need to eliminate or reduce the destructive effect of overvoltages of a high rate of rise dU/dt by using an additional protective element or device.

There are known solutions for reducing overvoltages of a high rate of rise dU/dt occurring as a result of switching operations conducted by means of a vacuum circuit breaker in the form of series chokes R-L with specially selected parameters. Such a choke functions as a conductor of insignificant impedance for low frequencies of applied voltage and as a considerable impedance for higher frequencies occurring during switching phenomena. This equipment is characterized by a low voltage drop across self-impedance and by a small value of dissipated power during steady state operation. However, this equipment, being very effective in reducing the rate of rise of voltage dU/dt, basically does not cause any change in the resonant frequency of the transformer, and thus it does not affect a reduction in or elimination of the generation of reignitions which in turn generate overvoltages of high rates of voltage rise dU/dt.

European patent application EP10460018.4 presents methods and a device for reducing high-frequency overvoltages occurring particularly while switching transformers on or off by means of vacuum circuit breakers. The above mentioned application describes a component of inductive character, comprising a high-frequency magnetic core located around the current conductor. The inductive component has at least one secondary winding to which at least one suppression resistor is connected. The presented device can be used as an accessory in switchgear comprising a vacuum circuit breaker, and in such case it is situated between the switchgear and the protected piece of equipment. While the component presented in the above application provides effective reduction in the rate of rise in voltage dU/dt and a reduction in the frequency of occurrence of overvoltages resulting from arc ignitions in a vacuum circuit breaker, it fails to significantly reduce the frequency of transient recovery voltage oscillations, and therefore it does not eliminate the problem of the development of reignitions which occur as a problem during switching-off, being the result of the high rate of rise in the transient recovery voltage on the terminals of the circuit breaker.

Patent description US 6 642 806 reveals a method allowing a reduction in the frequency of occurrence of overvoltages and/or in the amplitude value, whose characteristic feature is a magnetic core of high magnetic permeability located around the current-conducting lead. Such core is made of a magnetic material of suitable resistivity. A proper selection of the core parameters and its size allows effective suppression of high-frequency current components in electric power cables. As in the case of the above mentioned device, a disadvantage of this type of solution is that the device reduces the rate of voltage rise dU/dt and the overvoltage amplitude, but only for very high rates of rise. In the case of voltage oscillations connected with transformer switching-off process, the device has little effect on the reduction in the amplitude and frequency of oscillations of the transient recovery voltage.

The essence of the system for protecting a power transformer against overvoltages during the circuit breaker opening, which system contains a transformer whose high voltage winding terminals are connected in series with the circuit breaker by means of a series choke, is that there is a protective element connected to at least one of the phase terminals of the low voltage winding of the transformer.

Preferably, the protective element has the form of a capacitor one of whose terminals is grounded.

Alternatively, the protective element has the form of a series two-terminal RC network one of whose terminals is grounded.

Alternatively, the protective element has the form of a parallel two-terminal RC network, one of whose terminals is grounded.

Preferably, an overvoltage limiter is connected in parallel to the protective element.

The essence of the method of protecting a power transformer against overvoltages during the circuit breaker opening, in which the circuit breaker is connected with the transformer on the side of high voltage supply terminals, and which uses a series reactor to reduce the rate or voltage rise dU/dt during switching operations employing a vacuum circuit breaker connected into the circuit between the transformer and the circuit breaker, is that it additionally reduces the frequency and the amplitude of the transient recovery voltage oscillations during the breaker is opening, by connecting a protective element to the transformer, which element is connected to at least one of the phase terminals of the low voltage winding of the transformer.

Preferably, the amplitude of oscillating overvoltage is additionally reduced by connecting an overvoltage limiter to the protective element.

Preferably, a capacitor, a series two-terminal RC network, or a parallel two-terminal RC network is used as the protective element.

The advantage of the system according to the present invention is improved effectiveness of protection of a transformer furnished with chokes against overvoltages occurring during switching operations conducted by means of a vacuum circuit breaker. The use of the protective element connected to the terminals of the low voltage winding allows to reduce the frequency and amplitude of the oscillation of the transient recovery voltage that occurs while switching off the transformer, after arc quenching in the breaking chamber. This improvement is achieved without the need to use expensive and large high-voltage protective capacitors connected on the high voltage size of the transformer. Additional use of overvoltage limiters connected in parallel with the protective elements eliminates the risk of damage to the protective elements or to the transformer windings due to oscillatory overvoltages that can appear especially while an inductively loaded transformer is being switched off.

The use of the system according to the present invention makes it possible to eliminate in practice the problem of the exposition of a transformer and other elements directly connected with the transformer, such as cables or cable terminals, to overvoltages of a high rate of rise dU/dt, connected with switching processes using a circuit breaker and especially a vacuum circuit breaker.

The device according to the invention is presented in an embodiment in the drawing wherein:
fig. 1 shows the system in the first embodiment of the invention, in a schematic presentation
fig. 2 shows the system in the second embodiment of the invention, in a schematic presentation
fig. 3 shows the protective element in the form of a capacitor
fig. 4 shows the protective element in the form of a series two-terminal RC network
fig. 5 shows the protective element in the form of a parallel two-terminal RC network
fig. 6 shows phase voltages on the transformer terminals while the transformer is being switched off, with noticeable overvoltages caused by multiple reignitions in the circuit breaker chamber, before the application of the invention
fig. 7 shows the phase voltages on the transformer terminals while the transformer is being switched off, after the application of the invention.

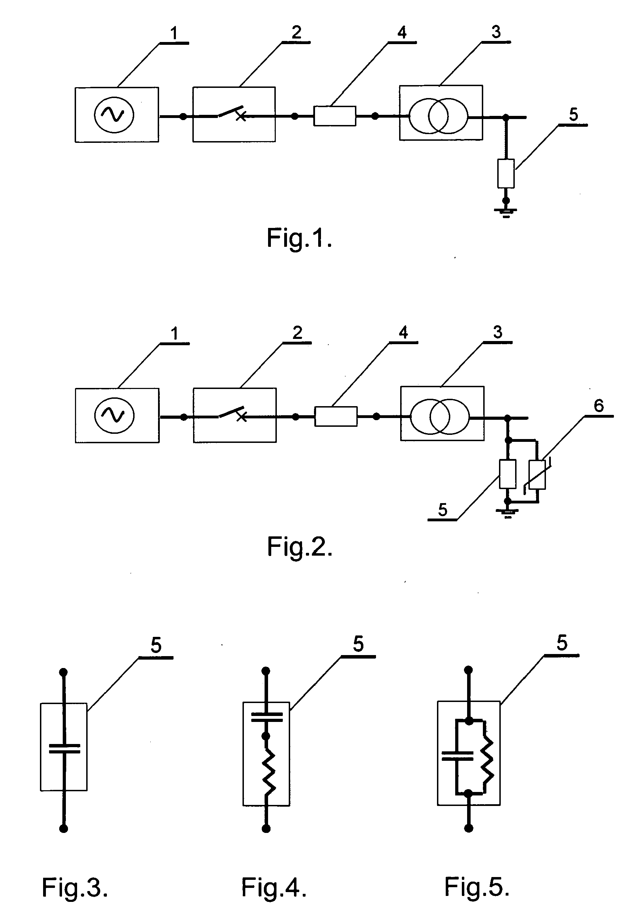

In the first embodiment of the invention presented in fig. 1, a fragment of the current path of an electric power substation contains a grid supply-current source 1, connected by distribution line sections with a vacuum circuit breaker 2 which is connected in series with a transformer 3 on the transformer high voltage winding terminals. Chokes 4 are connected in series between the high voltage terminals and the output terminals of the circuit breaker 2. On the low voltage side terminals, the transformer 3 is connected with protective elements 5. Each of the protective elements 5 has the form of a capacitor 5a, a series two-terminal RC network - 5b or a parallel two-terminal RC networks - 5c.

In the second embodiment of the invention presented in fig. 2, an overvoltage limiter 6 is connected parallel with each protective element 5. Also in the second embodiment of the invention, the protective element 5 has the form of a capacitor 5a, a series two-terminal RC network - 5b or a parallel two-terminal RC networks - 5c.

The protective elements 5 are connected to the low-voltage terminals of the transformer 3 to lower the natural frequency of the transformer. Lowering of the natural frequency of transformer 3 causes that when the transformer is being switched off, the oscillation of residual energy in the transformer circuit results in a slower rise in recovery voltage, which causes a reduction in the frequency of occurrence of reignitions in the vacuum chamber of the circuit breaker 2, or even in their elimination.

Additional use of overvoltage limiters connected in parallel with the protective elements eliminates the risk of damage to the protective elements or to the transformer windings due to oscillating overvoltages that can appear especially while an inductively loaded transformer is being switched off.

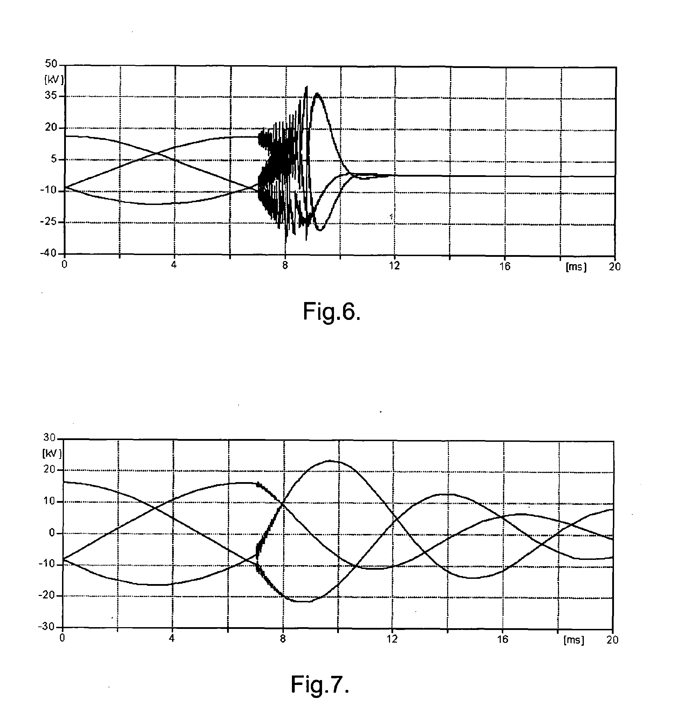

The three phase voltages on the high voltage terminals of a three-phase transformer while the transformer is switched off are shown in fig. 6. In the diagrams, between the 7th and 9th millisecond on the time axis, there are shown overvoltages of a very high rate of voltage rise dU/dt which were generated as a result of multiple reignitions in the breaking chamber, which took place before the application of the invention. For the presented example of a transformer, overvoltages exceed the rated voltage more than twice.

For a case with the invention applied, the waves of three phase voltages on the high voltage terminals of a three-phase transformer while the transformer is being switched off are shown in fig.7. The use of the protective element in the form of a capacitor connected to the low-voltage terminals of the transformer resulted in a reduction in the natural frequency of the transformer. In consequence, the phase voltage diagrams show only low-voltage oscillating waves of considerably smaller values of overvoltages compared with the values of overvoltages without the use of the solution according to the invention.

## Claims

1. A system for protecting an electric power transformer against overvoltage during the circuit breaker opening, containing a transformer (3) whose high voltage winding terminals are connected in series with the circuit breaker (2) by means of a series choke (4), **characterized in that** a protective element (5) is connected to at least one of the phase terminals of the low voltage winding of the transformer (3).

2. A system according to claim 1 **characterized in that** the protective element (5) has the form of a capacitor (5a) one of whose terminals is grounded.

3. A system according to claim 1 **characterized in that** the protective element (5) has the form of a series two-terminal RC network (5b) one of whose terminals is grounded.

4. A system according to claim 1 **characterized in that** the protective element (5) has the form of a parallel two-terminal RC network (5c) one of whose terminals is grounded.

5. A system according to any of the previous claims, **characterized in that** an overvoltage limiter (6) is connected in parallel to the protective element (5).

6. A method for protecting an electric power transformer against overvoltages while a circuit breaker connected with the transformer (3) on the side of the upper voltage supply terminals is opening, which makes use of a series choke (4) to reduce the rate of voltage rise dU/dt during switching operations employing a vacuum circuit breaker which is connected into the circuit between the transformer (3) and the circuit breaker (2), **characterized in that** the frequency and the amplitude of the transient recovery voltage oscillations during the breaker (2) opening is additionally reduced by connecting a protective element (5) to the transformer (3), which element is connected to at least one of the phase terminals of the low voltage winding of the transformer (3).

7. A method according to claim 6, **characterized in that** the amplitude of oscillating overvoltages is additionally reduced by connecting an overvoltage limiter (6) to the protective element (5).

8. A method according to claim 6 or 7, **characterized in that** as the protective element (5) is used a capacitor (5a), a series two-terminal RC network (5b), or a parallel two-terminal RC network (5c).
